# EUROPEAN PATENT SPECIFICATION

(11) **EP 4 163 333 B1**
(45) Date of publication and mention of the grant of the patent: **26.08.2026**
(21) Application number: 21201795.8
(22) Date of filing: 10.10.2021
(51) Int. Cl.: C08L 23/08, C08F 210/16, B32B 27/32, C08L 23/06

(54) **POLYETHYLENE COMPOSITION FOR A FILM LAYER**
POLYETHYLENZUSAMMENSETZUNG FÜR EINE FOLIENSCHICHT
COMPOSITION DE POLYÉTHYLÈNE POUR UNE COUCHE DE FILM

(43) Date of publication of application: 12.04.2023
(73) Proprietor: Borealis GmbH, 1020 Vienna (AT)
(72) Inventor: WANG, Jingbo, 4021 Linz (AT); BERGER, Friedrich, 4021 Linz (AT)
(74) Representative: TBK

(56) References cited:
- EP-A1- 3 838 984
- WO-A1-2021/122299

## Description

The present invention relates to a composition comprising a metallocene catalysed multimodal copolymer (P) of ethylene and a LDPE recyclate, to the use of the composition in film applications and to a film comprising the polymer composition of the invention.

Polyolefins, in particular polyethylene and polypropylene are increasingly consumed in large amounts in a wide range of applications, including packaging for food and other goods.

Polyethylene based materials are a particular problem as these materials are extensively used in packaging. Taking into account the huge amount of waste collected compared to the amount of waste recycled back into the stream, there is still a great potential for intelligent reuse of plastic waste streams and for mechanical recycling of plastic wastes.

It is thus important to form a circular economy that brings plastic waste back to a second life, i.e., to recycle it. This not only avoids leaving plastic waste in the environment but also recovers its value.

In addition, the European Commission confirmed in 2017 that it would focus on plastics production and use. The EU goals are that 1) by 2025 at least 55 % of all plastics packaging in the EU should be recycled and 2) by 2030 all plastic packaging placed in the EU market is reusable or easily recycled. This pushes the brand owners and plastic converters to pursue solutions with recyclate or virgin/recyclate blends.

Thus, there is an increasing importance to include polymers obtained from waste materials for the manufacturing of new products, i.e. wherein waste plastics (e.g. post-consumer recyclate (PCR)) can be turned into resources for new plastic products. Hence, environmental and economic aspects can be combined in recycling and reusing waste plastics material.

However, recycled plastics are normally inferior to virgin plastics in their quality due to degradation, contamination and mixing of different plastics.

In addition, compositions containing recycled polyolefin materials normally have properties, which are much worse than those of the virgin materials, unless the amount of recycled polyolefin added to the final composition is extremely low. For example, such materials often have limited impact strength and poor mechanical properties and thus, they do not fulfil customer requirements.

Blending recycled plastics with virgin plastics is a common practice of improving the quality of recycled plastics.

Based on this it was one objective of the present invention to provide a polyethylene based composition allowing the use of recycled LDPE, which can be used for producing films with good properties, especially good mechanical properties such as impact and stiffness. In addition, it should be possible to add higher amounts of recyclate into the composition.

The inventors have now found that a blend of a metallocene-catalysed multimodal polyethylene copolymer (P) made with a specific metallocene catalyst and having a specific polymer design and a LDPE recyclate (i.e. a mixed-plastic-polyethylene recycling blend), provides films with an improved balance of properties, especially in view of stiffness (i.e. tensile modulus) and impact properties, such as dart drop impact.

### Description of the invention

The present invention is therefore directed to a composition comprising
(I) 50.0 to 99.0 wt% of a metallocene catalysed multimodal copolymer (P) of ethylene, which consists of
   (i) 30.0 to 70.0 wt% of an ethylene-1-butene polymer component (A) and
   (ii) 70.0 to 30.0 wt% of an ethylene-1-hexene polymer component (B),
      whereby the ethylene-1-butene polymer component (A) has
         - a density in the range of from 920 to 960 kg/m³ and an MFR₂ (190°C, 2.16 kg, ISO 1133) in the range of from 1.0 to 400.0 g/10 min;
      the ethylene-1-hexene polymer component (B) has
         - a density in the range of from 880 to 915 kg/m³ and an MFR₂ (190°C, 2.16 kg, ISO 1133) in the range of from 0.01 to 1.5 g/10 min; and
      whereby the multimodal copolymer (P) has
         - a density in the range of from 905.0 to 930 kg/m³ and an MFR₂ (190°C, 2.16 kg, ISO 1133) in the range of from 0.1 to 2.0 g/10 min and
         - a ratio of the MFR₂₁ (190°C, 21.6 kg, ISO 1133) to MFR₂ (190°C, 2.16 kg, ISO 1133), MFR₂₁/MFR₂, in the range of from 23 to 50; and
(II) 1.0 to 50.0 wt% of a mixed-plastic-polyethylene recycling blend (B) having
   - a MFR₂ (ISO 1133, 2.16 kg, 190 °C) of from 0.1 to 1.2 g/10 min, preferably from 0.3 to 1.1 g/10 min;
   - a density of from 910 to 945 kg/m³, preferably from 915 to 942 kg/m³, most preferably from 918 to 940 kg/m³; and
   - a total amount of ethylene units (C2 units) of from 80.0 to 96.0 wt%, as measured by NMR of the d2-tetrachloroethylene soluble fraction,
   with the total amount of C2 units being based on the total weight amount of monomer units in the mixed-plastic-polyethylene blend (B) and measured according to quantitative ¹³C{1H} NMR measurement,
   whereby the amount of (I) and (II) adds up to 100.0 wt%.

In an embodiment of the present invention, the ethylene-1-butene polymer component (A) of the metallocene-catalysed multimodal polyethylene copolymer (P) consists of an ethylene polymer fraction (A-1) and an ethylene polymer fraction (A-2), wherein the density of fractions (A-1) and (A-2) is in the range of from 920 to 960 kg/m³ and the MFR₂ (190°C, 2.16 kg, ISO 1133) is in the range of from 0.1 to 500 g/10 min and wherein the density and/or the MFR₂ (190°C, 2.16 kg, ISO 1133) of ethylene polymer fractions (A-1) and (A-2) is different.

Unexpectedly such a composition provides films with an excellent combination of stiffness and impact, i.e. tensile modulus and dart drop strength.

The invention is therefore further directed to a film comprising at least one layer comprising the composition of the invention.

The specific design of the metallocene catalysed multimodal copolymer (P) thereby allows the addition of more recyclate and still provides films with good impact/stiffness balance.

### Definitions

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Metallocene catalysed multimodal copolymer is defined in this invention as multimodal copolymer (P) of ethylene with at least two different comonomers selected from alpha-olefins having from 4 to 10 carbon atoms, which has been produced in the presence of a metallocene catalyst.

Term "multimodal" in context of multimodal copolymer (P) of ethylene means herein multimodality with respect to melt flow rate (MFR) of the ethylene polymer components (A) and (B), i.e. the ethylene polymer components (A) and (B, have different MFR values. The multimodal copolymer (P) can have further multimodality with respect to one or more further properties between the ethylene polymer components (A) and (B) as well as between fractions (A-1) and (A-2), as will be described later below.

The multimodal copolymer (P) of the invention as defined above, below or in claims is also referred herein shortly as "multimodal PE".

The ethylene polymer component (A) and the ethylene polymer component (B), when both mentioned, are also be referred as "ethylene polymer component (A) and (B)".

The following preferable embodiments, properties and subgroups of multimodal PE and the ethylene polymer components (A) and (B) thereof, as well as the ethylene polymer fractions (A-1) and (A-2) and the film of the invention including the preferable ranges thereof, are independently generalisable so that they can be used in any order or combination to further define the preferable embodiments of the multimodal PE and the article of the invention.

For the purposes of the present description and of the subsequent claims, the term "mixed-plastic-polyethylene recycling blend" indicates a polymer material including predominantly units derived from ethylene apart from other polymeric ingredients of arbitrary nature. Such polymeric ingredients may for example originate from monomer units derived from alpha olefins such as propylene, butylene, hexene, octene, and the like, styrene derivatives such as vinylstyrene, substituted and unsubstituted acrylates, substituted and unsubstituted methacrylates.

Said polymeric materials can be identified in the mixed-plastic polyethylene composition by means of quantitative ¹³C{1H} NMR measurements as described herein. In the quantitative ¹³C{1H} NMR measurement used herein and described below in the measurement methods different units in the polymeric chain can be distinguished and quantified. These units are ethylene units (C2 units), units having 3, 4 and 6 carbons and units having 7 carbon atoms.

Thereby, the units having 3 carbon atoms (C3 units) can be distinguished in the NMR spectrum as isolated C3 units (isolated C3 units) and as continuous C3 units (continuous C3 units) which indicate that the polymeric material contains a propylene based polymer. These continuous C3 units can also be identified as iPP units.

The units having 3, 4, 6 and 7 carbon atoms describe units in the NMR spectrum which are derived from two carbon atoms in the main chain of the polymer and a short side chain or branch of 1 carbon atom (isolated C3 unit), 2 carbon atoms (C4 units), 4 carbon atoms (C6 units) or 5 carbon atoms (C7 units).

The units having 3, 4 and 6 carbon atoms (isolated C3, C4 and C6 units) can derive either from incorporated comonomers (propylene, 1-butene and 1-hexene comonomers) or from short chain branches formed by radical polymerization.

The units having 7 carbon atoms (C7 units) can be distinctively attributed to the mixed-plastic-polyethylene primary recycling blend (A) as they cannot derive from any comonomers. 1-heptene monomers are not used in copolymerization. Instead, the C7 units represent presence of LDPE distinct for the recyclate. It has been found that in LDPE resins the amount of C7 units is always in a distinct range. Thus, the amount of C7 units measured by quantitative ¹³C{1H} NMR measurements can be used to calculate the amount of LDPE in a polyethylene composition.

Thus, the amounts of continuous C3 units, isolated C3 units, C4 units, C6 units and C7 units are measured by quantitative ¹³C{1H} NMR measurements as described below, whereas the LDPE content is calculated from the amount of C7 units as described below.

The total amount of ethylene units (C2 units) is attributed to units in the polymer chain, which do not have short side chains of 1-5 carbon atoms, in addition to the units attributed to the LDPE (i.e. units which have longer side chains branches of 6 or more carbon atoms).

Conventionally further components such as fillers, including organic and inorganic fillers for example talc, chalk, carbon black, and further pigments such as TiO₂ as well as paper and cellulose may be present. In a specific and preferred embodiment the waste stream is a consumer waste stream, such a waste stream may originate from conventional collecting systems such as those implemented in the European Union. Post-consumer waste material is characterized by a limonene content of from 0.1 to 500 mg/kg (as determined using solid phase microextraction (HS-SPME-GC-MS) by standard addition).

The term "natural" in the context of the present invention means that the components are of natural colour. This means that no pigments (including carbon black) are included in the components of the mixed-plastic-polyethylene recycling blend of the present invention.

### Composition

The composition of the present invention comprises
(I) 50.0 to 99.0 wt%, preferably 60.0 to 95.0 wt% and more preferably 65.0 to 92.0 wt% of a metallocene catalysed multimodal copolymer (P) and
(II) 1.0 to 50.0 wt%, preferably 5.0 to 40.0 wt% and more preferably 8.0 to 35.0 wt% of a mixed-plastic-polyethylene recycling blend (B).

The amount of (I) and (II) add up to 100.0 wt%.

### (I) Multimodal PE as well as ethylene polymer component (A) and (B) and ethylene polymer fractions (A-1) and (A-2)

The metallocene catalysed multimodal copolymer (P) is referred herein as "multimodal", since the ethylene polymer component (A), optional including ethylene polymer fractions (A-1) and (A-2), and ethylene polymer component (B) have been produced under different polymerization conditions resulting in different Melt Flow Rates (MFR, e.g. MFR₂). I.e. the multimodal PE is multimodal at least with respect to difference in MFR of the ethylene polymer components (A) and (B).

As stated above the MFR₂ of the ethylene polymer components (A) and (B) are different from each other.

The ethylene polymer component (A) has a MFR₂ in the range of 1.0 to 400 g/10 min, preferably of 2.0 to 100 g/10 min, more preferably of 2.5 to 40 g/10 min and even more preferably of 3.0 to 15 g/10 min.

The ethylene polymer component (B) has a MFR₂ in the range of 0.01 to 1.5 g/10 min, preferably of 0.02 to 1.3 g/10 min, more preferably of 0.05 to 1.0 g/10 min and even more preferably of 0.08 to 0.8 g/10 min.

The MFR₂ of the ethylene polymer fractions (A-1) and (A-2) may be different from each other, or may be the same.

The ethylene polymer fractions (A-1) and (A-2) have a MFR₂ in the range of 1.0 to 500 g/10 min, preferably of 1.5 to 300 g/10 min, more preferably of 2.0 to 100 g/10 min and even more preferably of 2.5 to 50 g/10 min, like 3.0 to 25 g/10 min.

In an embodiment of the invention, the ratio of the MFR₂ of the ethylene polymer fraction (A-1) to the MFR₂ of the ethylene polymer component (A) is greater than 0.30, preferably in a range of 0.35 to 1.0, more preferably in the range of 0.40 to 1.0 and even more preferably 0.45 to 1.0, like 0.50 to 0.95.

The MFR₂ of the multimodal copolymer (P) is in the range of 0.1 to 2.0 g/10 min, preferably 0.3 to 1.8 g/10 min, more preferably 0.4 to 1.6 g/10 min and even more preferably of 0.5 to 1.5 g/10 min.

The multimodal copolymer (P) furthermore has a ratio of the MFR₂₁ (190°C, 21.6 kg, ISO 1133) to MFR₂ (190°C, 2.16 kg, ISO 1133), MFR₂₁/MFR₂, in the range of from 23 to 50, preferably from 25 to 45, more preferably from 27 to 40.

In a further embodiment, the ratio of the MFR₂ of ethylene polymer component (A) to the MFR₂ of the final multimodal copolymer (P) is greater than 2.5, preferably 3.0 to 25.0, more preferably 3.5 to 20.0 and even more preferably 4.0 to 18.0.

Naturally, in addition to multimodality with respect to, i.e. difference between, the MFR₂ of ethylene polymer components (A) and (B) the multimodal PE of the invention can also be multimodal e.g. with respect to the density of the ethylene polymer components (A) and (B).

Preferably, the density of ethylene polymer component (A) is different, preferably higher, than the density of the ethylene polymer component (B).

The density of the ethylene polymer component (A) is in the range of 920 to 960 kg/m³, preferably of 925 to 950 kg/m³, more preferably 930 to 945 kg/m³ and/or the density of the ethylene polymer component (B) is of in the range of 880 to 915 kg/m³, preferably of 890 to 905 kg/m³.

The polymer fractions (A-1) and (A-2) have a density in the range of from 920 to 960 kg/m³, preferably of 925 to 955 kg/m³, more preferably of 930 to 950 kg/m³, like 935 to 945 kg/m³. The density of polymer fractions (A-1) and (A-2) may be the same or may be different from each other.

The metallocene catalysed multimodal copolymer (P) is preferably a linear low density polyethylene (LLDPE) which has a well known meaning.

The density of the multimodal copolymer (P) is in the range of 905 to 930 kg/m³, preferably of 908 to 925 kg/m³, more preferably of 910 to 920 kg/m³ and even more preferably of 912 to 918 kg/m³.

More preferably the multimodal copolymer (P) is multimodal at least with respect to, i.e. has a difference between, the MFR₂, the comonomer type as well as with respect to, i.e. has a difference between, the density of the ethylene polymer components (A) and (B), as defined above, below or in the claims including any of the preferable ranges or embodiments of the polymer composition.

It is within the scope of the invention, that the first and the second ethylene polymer fraction (A-1 and A-2) of the ethylene polymer component (A) are present in a weight ratio of 4:1 up to 1:4, such as 3:1 to 1:3, or 2:1 to 1:2, or 1:1.

The ethylene-1-butene polymer component (A) is present in an amount of 30.0 to 70.0 wt% based on the multimodal copolymer (P), preferably in an amount of 32.0 to 55.0 wt% and even more preferably in an amount of 34.0 to 45.0 wt%.

Thus, the ethylene-1-hexene polymer component (B) is present in an amount of 70.0 to 30.0 wt% based on the multimodal copolymer (P), preferably in an amount of 68.0 to 45.0 wt% and more preferably in an amount of 66.0 to 55.0 wt%.

The metallocene catalysed multimodal copolymer (P), can be produced with a 2-stage or 3-stage process, preferably comprising at least one slurry reactor (loop reactor), whereby the slurry loop reactor is connected in series with a gas phase reactor (GPR), so that the ethylene polymer leaving the slurry reactor is fed to the GPR to produce bimodal polyethylene terpolymer. Alternatively, the process comprises 2 slurry reactors (loop reactors) and one gas phase reactor connected in series, whereby for the 2 slurry reactors reaction conditions are chosen in a way that in both slurry reactors the same product is produced (same MFR and density, i.e. first and second fraction (A-1) and (A-2) are the same).

Preferably, the metallocene catalysed multimodal copolymer (P) is produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). The loop reactor 2 is thereby connected in series to a gas phase reactor (GPR), so that the first ethylene polymer component (A) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced.

Such a process is described inter alia in WO 2016/198273, WO 2021009189, WO 2021009190, WO 2021009191 and WO 2021009192. Full details of how to prepare suitable metallocene catalysed multimodal copolymer (P) can be found in these references.

A suitable process is the Borstar PE 3G process.

The metallocene catalysed multimodal copolymer (P) according to the present invention is therefore preferably produced in a loop loop gas cascade. Such polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry and the amount of polymer produced in an optional prepolymerization step is counted to the amount (wt%) of ethylene polymer component (A).

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein. It is understood within the scope of the invention, that the amount or polymer produced in the prepolymerization lies within 1 to 5 wt% in respect to the final metallocene catalysed multimodal copolymer (P). This can counted as part of the first ethylene polymer component (A).

### Catalyst

The metallocene catalysed multimodal copolymer (P) used in the process of the invention is one made using a metallocene catalyst. A metallocene catalyst comprises a metallocene complex and a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I): 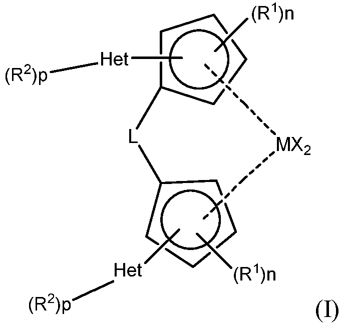
wherein each X is independently a halogen atom, a C₁₋₆-alkyl, C₁₋₆-alkoxy group, phenyl or benzyl group;
each Het is independently a monocyclic heteroaromatic group containing at least one heteroatom selected from O or S;
L is -R'₂Si-, wherein each R' is independently C₁₋₂₀-hydrocarbyl or C₁₋₁₀-alkyl substituted with alkoxy having 1 to 10 carbon atoms;
M is Ti, Zr or Hf;
each R¹ is the same or different and is a C₁₋₆-alkyl group or C₁₋₆-alkoxy group;
each n is 1 to 2;
each R² is the same or different and is a C₁₋₆-alkyl group, C₁₋₆-alkoxy group or -Si(R)₃ group;
each R is C₁₋₁₀-alkyl or phenyl group optionally substituted by 1 to 3 C₁₋₆-alkyl groups; and each p is 0 to 1.

Preferably, the compound of formula (I) has the structure 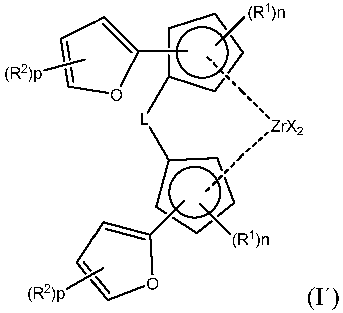 wherein each X is independently a halogen atom, a C₁₋₆-alkyl, C₁₋₆-alkoxy group, phenyl or benzyl group;
L is a Me₂Si-;
each R¹ is the same or different and is a C₁₋₆-alkyl group, e.g. methyl or t-Bu;
each n is 1 to 2;
R² is a -Si(R)₃ alkyl group; each p is 1;
each R is C₁₋₆-alkyl or phenyl group.

Highly preferred complexes of formula (I) are

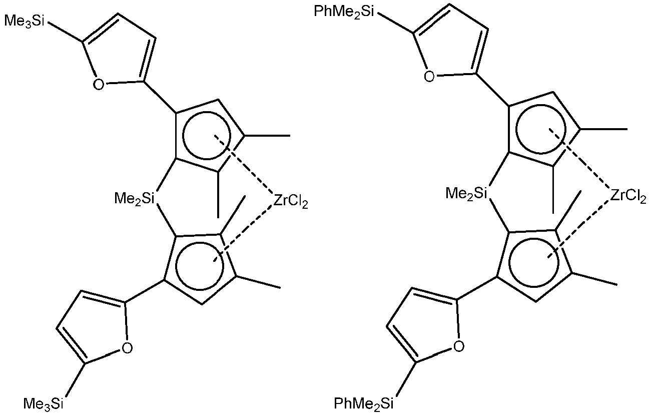

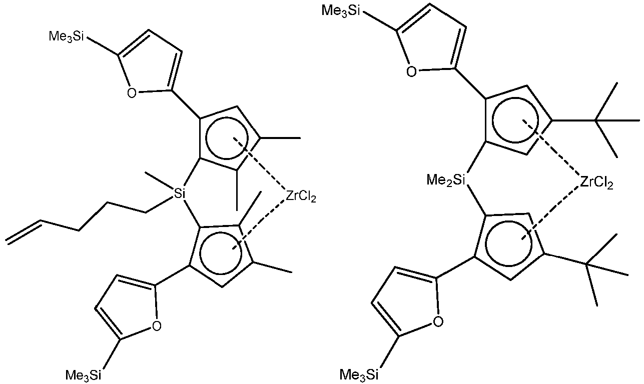

Most preferably the complex dimethylsilanediylbis[2-(5-trimethylsilylfuran-2-yl)-4,5-dimethylcyclopentadien-1-yl] zirconium dichloride is used.

More preferably the ethylene polymer components (A) and (B) of the multimodal copolymer (P) are produced using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred. Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

The metallocene catalysed multimodal copolymer (P) may contain further polymer components and optionally additives and/or fillers. In case the metallocene catalysed multimodal copolymer (P) contains further polymer components, then the amount of the further polymer component(s) typically varies between 3.0 to 20.0 wt% based on the combined amount of the metallocene catalysed multimodal copolymer (P) and the other polymer component(s).

The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA).

It is understood herein that any of the additives and/or fillers can optionally be added in so-called master batch, which comprises the respective additive(s) together with a carrier polymer. In such case the carrier polymer is not calculated to the polymer components of the metallocene catalysed multimodal copolymer (P), but to the amount of the respective additive(s), based on the total amount of polymer composition (100wt%).

### (II) mixed-plastic-polyethylene blend (B)

In addition to the the metallocene catalysed multimodal copolymer (P), the composition of the present invention comprises a mixed-plastic-polyethylene blend (B).

It is the essence of the present invention that this recycling blend is obtained from a post-consumer waste stream and/or a post-industrial waste stream, preferably from a post-consumer waste stream.

According to the present invention the mixed-plastic-polyethylene recycling blend (B) is generally a blend, wherein at least 90 wt%, preferably at least 95 wt%, more preferably 100 wt% of the mixed-plastic-polyethylene recycling blend (B) originates from post-consumer waste, such as from conventional collecting systems (curb-side collection), such as those implemented in the European Union, and/or post-industrial waste, preferably from post-consumer waste.

Said post-consumer waste may be identified by its limonene content. It is preferred that the post-consumer waste has a limonene content of from 0.1 to 500 mg/kg.

The mixed-plastic-polyethylene recycling blend (B) preferably comprises
a total amount of ethylene units (C2 units) of from 80.0 wt% to 96.0 wt%, more preferably of from 82.5 wt% to 95.5 wt%, still more preferably of from 85.0 wt% to 95.5 wt% and most preferably of from 87.5 wt% to 95.0 wt%;
a total amount of continuous units having 3 carbon atoms corresponding to polypropylene (continuous C3 units) of from 0.2 to 6.5 wt%, more preferably from 0.4 wt% to 6.0 wt%, still more preferably from 0.6 wt% to 5.5 wt% and most preferably from 0.75 wt% to 5.0 wt%. The total amounts of C2 units and continuous C3 units thereby are based on the total weight amount of monomer units in the mixed-plastic-polyethylene recycling blend (B) and are measured according to quantitative ¹³C{1H} NMR measurement.

In addition to C2 units and continuous C3 units the mixed-plastic-polyethylene recycling blend (B) can further comprise units having 3, 4, 6 or 7 or more carbon atoms so that the mixed-plastic-polyethylene recycling blend (B) overall can comprise ethylene units and a mix of units having 3, 4, 6 and 7 or more carbon atoms.

The mixed-plastic-polyethylene recycling blend (B) preferably comprises one or more in any combination, preferably all of:
a total amount of units having 3 carbon atoms as isolated C3 units (isolated C3 units) of from 0.00 wt% to 0.50 wt%, more preferably from 0.00 wt% to 0.40 wt%, still more preferably from 0.00 wt% to 0.30 wt% and most preferably from 0.00 wt% to 0.25 wt%;
a total amount of units having 4 carbon atoms (C4 units) of from 0.50 to 5.00 wt%, more preferably from 0.75 wt% to 4.00 wt%, still more preferably from 1.00 wt% to 3.50 wt% and most preferably from 1.25 wt% to 3.00 wt%;
a total amount of units having 6 carbon atoms (C6 units) of from 0.50 to 7.50 wt%, more preferably from 0.75 wt% to 6.50 wt%, still more preferably from 1.00 wt% to 5.50 wt% and most preferably from 1.25 wt% to 5.00 wt%;
a total amount of units having 7 carbon atoms (C7 units) of from 0.20 wt% to 2.50 wt%, of from 0.30 wt% to 2.00 wt%, still more preferably of from 0.40 to 1.50 wt% and most preferably of from 0.45 wt% to 1.25 wt%, and
a LDPE content of from 20.0 to 65.0 wt%, more preferably from 25.0 wt% to 62.5 wt%, still more preferably from 30.0 wt% to 60.0 wt% and most preferably from 32.0 wt% to 55.0 wt%.

The total amounts of C2 units, continuous C3 units, isolated C3 units, C4 units, C6 units, C7 units and LDPE content thereby are based on the total weight amount of monomer units in the mixed-plastic-polyethylene recycling blend (B) and are measured or calculated according to quantitative ¹³C{1H} NMR measurement.

Preferably, the total amount of units, which can be attributed to comonomers (i.e. isolated C3 units, C4 units and C6 units), in the mixed-plastic-polyethylene recycling blend (B) is from 4.00 wt% to 20.00 wt%, more preferably from 4.50 wt% to 17.50 wt%, still more preferably from 4.75 wt% to 15.00 wt% and most preferably from 5.00 wt% to 12.50 wt%, and is measured according to quantitative ¹³C{1H} NMR measurement.

It is preferred that the mixed-plastic-polyethylene recycling blend (B) has
a MFR₂ (ISO 1133, 2.16 kg, 190°C) of from 0.1 to 1.2 g/10 min, more preferably from 0.2 to 1.1 g/10 min; and/or
a density of from 910 to 945 kg/m³, more preferably from 915 to 942 kg/m³, most preferably from 918 to 940 kg/m³.

The mixed-plastic-polyethylene recycling blend (B) preferably does not comprise carbon black. It is further preferred that the mixed-plastic-polyethylene recycling blend (B) does not comprise any pigments other than carbon black.

The mixed-plastic-polyethylene recycling blend (B) preferably is a natural mixed-plastic-polyethylene recycling blend (B).

The mixed-plastic-polyethylene recycling blend (B) may also include:
0 to 10 wt% units derived from alpha olefin(s),
0 to 3.0 wt% stabilizers,
0 to 3.0 wt% talc,
0 to 3.0 wt% chalk,
0 to 6.0 wt% further components
all percentages with respect to the mixed-plastic-polyethylene recycling blend (B).

The mixed-plastic-polyethylene recycling blend (B) preferably has one or more, more preferably all, of the following properties in any combination:
a MFR₅ (ISO 1133, 5.0 kg, 190 °C) of from 1.5 to 5.0 g/10 min, more preferably from 2.0 to 4.0 g/10 min;
a MFR₂₁ (ISO 1133, 21.6 kg, 190 °C) of from 20.0 to 50.0 g/10 min, more preferably from 25.0 to 45.0 g/10 min;
a polydispersity index PI of from 1.0 to 3.5 s-1, more preferably from 1.3 to 3.0 s-1;
a shear thinning index SHI_{2.7/210} of from 15 to 40, more preferably from 20 to 35;
a complex viscosity at the frequency of 300 rad/s, eta300, of from 500 to 750 Pa-s, more preferably from 550 to 700 Pa·s;
a complex viscosity at the frequency of 0.05 rad/s, eta0.05, of from 15000 to 30000 Pa·s, more preferably from 15500 to 27500 Pa·s;
a strain hardening modulus, SH modulus, of from 12.5 to 20.0 MPa, more preferably from 13.0 to 17.5 MPa.

It is preferred that the mixed-plastic-polyethylene recycling blend (B) has a comparatively low gel content, especially in comparison to other mixed-plastic-polyethylene recycling blends.

The mixed-plastic-polyethylene recycling blend (B) preferably has a gel content for gels with a size of from above 600 µm to 1000 µm of not more than 1000 gels/m², more preferably not more than 850 gels/m². The lower limit of the gel content for gels with a size of from above 600 µm to 1000 µm is usually 100 gels/m², preferably 150 gels/m².

Still further, the mixed-plastic polyethylene composition preferably has a gel content for gels with a size of from above 1000 µm of not more than 200 gels/m², more preferably not more than 150 gels/m². The lower limit of the gel content for gels with a size of from above 1000 µm is usually 10 gels/m², preferably 14 gels/m².

Mixed-plastic-polyethylene blend(s) (B) as used herein are commercially available. One suitable recyclate is e.g. available from Ecoplast Kunststoffrecycling GmbH under the brand names NAV 101 and NAV 102.

### Film of the invention

The film of the invention comprises at least one layer comprising the composition as described above. The film can be a monolayer film comprising the composition or a multilayer film, wherein at least one layer comprises the composition. The terms "monolayer film" and multilayer film" have well known meanings in the art.

The layer of the monolayer or multilayer film of the invention may consist of the composition of the invention as such or of a blend of the composition together with further polymer(s). In case of blends, any further polymer is different from the metallocene catalysed multimodal copolymer (P) and is preferably a polyolefin. Part of the above mentioned additives, like processing aids, can optionally added to the metallocene catalysed multimodal copolymer (P) during the film preparation process.

Preferably, the at least one layer of the invention comprises at least 50 wt%, more preferably at least 60 wt%, even more preferably at least 70 wt%, yet more preferably at least 80 wt%, of the composition of the invention. Most preferably said at least one layer of the film of invention consists of composition.

Accordingly, the films of the present invention may comprise a single layer (i.e. monolayer) or may be multilayered. Multilayer films typically, and preferably, comprise at least 3 layers.

The films are preferably produced by any conventional film extrusion procedure known in the art including cast film and blown film extrusion. Most preferably, the film is a blown or cast film, especially a blown film. E.g. the blown film is produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the preferable blown or cast film is a multilayer film then the various layers are typically coextruded. The skilled man will be aware of suitable extrusion conditions.

Films according to the present invention may be subjected to post-treatment processes, e.g. surface modifications, lamination or orientation processes or the like. Such orientation processes can be mono-axially (MDO) or bi-axially orientation, wherein mono-axial orientation is preferred.

In another preferred embodiment, the films are unoriented.

The resulting films may have any thickness conventional in the art. The thickness of the film is not critical and depends on the end use. Thus, films may have a thickness of, for example, 300 µm or less, typically 6 to 200 µm, preferably 10 to 180 µm, e.g. 20 to 150 µm or 20 to 120 µm. If desired, the polymer of the invention enables thicknesses of less than 100 µm, e.g. less than 50 µm. Films of the invention with thickness even less than 20 µm can also be produced whilst maintaining good mechanical properties.

Furthermore, the present invention is also directed to the use of the inventive article as packing material, in particular as a packing material for secondary packaging, which do not require a food approval or even for primary packaging for non-food products.

The films of the invention are characterized by a dart-drop impact strength (DDI) determined according to ASTM D1709, method A on a 40 µm monolayer test blown film of at least 300 g up to 2500 g, preferably 400 g to 2200 g and more preferably 500 g to 2000 g.

Films according to the present invention furthermore have good stiffness (tensile modulus measured on a 40 µm monolayer test blown film according to ISO 527-3), i.e. >150 MPa (in both directions).

Thus, the films comprising the composition of the invention may further have a tensile modulus (measured on a 40 µm monolayer test blown film according to ISO 527-3) in machine (MD) as well as in transverse (TD) direction in the range of from >150 MPa to 350 MPa, preferably of from 160 MPa to 300 MPa.

The invention will be further described with reference to the following non-limiting examples.

### Determination methods

Unless otherwise stated in the description or in the experimental part, the following methods were used for the property determinations of the polymers (including its fractions and components) and/or any sample preparations thereof as specified in the text or experimental part.

### Melt Flow Rate

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg (MFR₂), 5 kg (MFR₅) or 21.6 kg (MFR₂₁).

### Calculation of MFR₂ of Component B and of Fraction (A-2)

$logA = x ⋅ logB + \left(1-x\right) ⋅ logC$ $C = {{10}^{∧}}^{\frac{\left(logA-x.logB\right)}{\left(1-x\right)}}$

For Component B:
B = MFR₂ of Component (A)
C = MFR₂ of Component (B)
A = final MFR₂ (mixture) of multimodal polyethylene copolymer (P)
X = weight fraction of Component (A)

For Fraction (A-2):
B = MFR₂ of 1^{st} fraction (A-1)
C = MFR₂ of 2^{nd} fraction (A-2)
A = final MFR₂ (mixture) of loop polymer (= Component (A))
X = weight fraction of the 1^{st} fraction (A-1)

### Density

Density of the polymer was measured according to ASTM; D792, Method B (density by balance at 23°C) on compression moulded specimen prepared according to EN ISO 1872-2 (February 2007) and is given in kg/m³.

### Quantification of C2, iPP (continuous C3), LDPE and polyethylene short chain branches in polyethylene based recylates

Quantitative ¹³C{1H} NMR spectra were recorded in the solution-state using a Bruker Avancelll 400MHz NMR spectrometer operating at 400.15 and 100.62 MHz for ¹H and ¹³C respectively. All spectra were recorded using a ¹³C optimised 10 mm extended temperature probehead at 125°C using nitrogen gas for all pneumatics. Approximately 200 mg of material was dissolved in 3 ml of 1,2-tetrachloroethane-d₂ (TCE-d₂) along with chromium-(III)-acetylacetonate (Cr(acac)₃) resulting in a 65 mM solution of relaxation agent in solvent {singh09}. To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme {zhou07,busico07}. A total of 6144 (6k) transients were acquired per spectra. Quantitative ¹³C{1H} NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. Characteristic signals corresponding to polyethylene with different short chain branches (B1, B2, B4, B5, B6plus) and polypropylene were observed {randall89, brandolini00}.

Characteristic signals corresponding to the presence of polyethylene containing isolated B1 branches (starB1 33.3 ppm), isolated B2 branches (starB2 39.8 ppm), isolated B4 branches (twoB4 23.4 ppm), isolated B5 branches (threeB5 32.8 ppm), all branches longer than 4 carbons (starB4plus 38.3 ppm) and the third carbon from a saturated aliphatic chain end (3s 32.2 ppm) were observed. The intensity of the combined ethylene backbone methine carbons (ddg) containing the polyethylene backbone carbons (dd 30.0 ppm), γ-carbons (g 29.6 ppm) the 4s and the threeB4 carbon (to be compensated for later on) is taken between 30.9 ppm and 29.3 ppm excluding the Tββ from polypropylene. The amount of C2 related carbons was quantified using all mentioned signals according to the following equation: 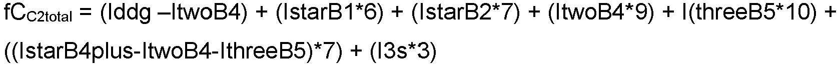 fCC2total = (Iddg -ltwoB4) + (IstarB1*6) + (IstarB2*7) + (ItwoB4*9) + I(threeB5*10) + ((IstarB4plus-ItwoB4-IthreeB5)*7) + (I3s*3)

Characteristic signals corresponding to the presence of polypropylene (iPP, continuous C3)) were observed at 46.7 ppm, 29.0 ppm and 22.0 ppm. The amount of PP related carbons was quantified using the integral of Sαα at 46.6 ppm: ${fC}_{PP} = lsαα * 3$

The weight percent of the C2 fraction and the polypropylene can be quantified according following equations: ${wt}_{C 2 fraction} = {fC}_{C 2 total} * 100 / \left({fC}_{C 2 total}+{fC}_{PP}\right)$ ${wt}_{PP} = {fC}_{PP} * 100 / \left({fC}_{C 2 total}+{fC}_{PP}\right)$

Characteristic signals corresponding to various short chain branches were observed and their weight percentages quantified as the related branch would be an alpha-olefin, starting by quantifying the weight fraction of each: $fwtC 2 = {fC}_{C 2 total} - \left(\left(lstarB1*3\right)-\left(lstarB2*4\right)-\left(ltwoB4*6\right)-\left(lthreeB5*7\right)\right.$ $fwtC 3 \left(isolated C3\right) = lstarB 1 * 3$ $fwtC 4 = lstarB 2 * 4$ $fwtC 6 = ltwoB 4 * 6$ $fwtC 7 = lthreeB 5 * 7$

Normalisation of all weight fractions leads to the amount of weight percent for all related branches: ${fsum}_{wt % total} = fwtC 2 + fwtC 3 + fwtC 4 + fwtC 6 + fwtC 7 + {fC}_{PP}$ $wtC 2 total = fwtC 2 * 100 / {fsum}_{wt % total}$ $wtC 3 total = fwtC 3 * 100 / {fsum}_{wt % total}$ $wtC 4 total = fwtC 4 * 100 / {fsum}_{wt % total}$ $wtC 6 total = fwtC 6 * 100 / {fsum}_{wt % total}$ $wtC 7 total = fwtC 7 * 100 / {fsum}_{wt % total}$

The content of LDPE can be estimated assuming the B5 branch, which only arises from ethylene being polymerized under high pressure process, being almost constant in LDPE. We found the average amount of B5 if quantified as C7 at 1.46 wt%. With this assumption it is possible to estimate the LDPE content within certain ranges (approximately between 20 wt% and 80 wt%), which are depending on the SNR ratio of the threeB5 signal: $wt % LDPE = wtC 7 total * 100 / 1.46$

References:
- zhou07: Zhou, Z., Kuemmerle, R., Qiu, X., Redwine, D., Cong, R., Taha, A., Baugh, D. Winniford, B., J. Mag. Reson. 187 (2007) 225
- busico07: Busico, V., Carbonniere, P., Cipullo, R., Pellecchia, R., Severn, J., Talarico, G., Macromol. Rapid Commun. 2007, 28, 1128
- singh09: Singh, G., Kothari, A., Gupta, V., Polymer Testing 28 5 (2009), 475
- randall89: J. Randall, Macromol. Sci., Rev. Macromol. Chem. Phys. 1989, C29, 201.
- brandolini00: A. J. Brandolini, D. D. Hills, NMR Spectra of Polymers and Polymer Additives, Marcel Dekker Inc., 2000

### Rheological measurements

### Dynamic Shear Measurements (frequency sweep measurements)

The characterisation of melt of polymer composition or polymer as given above or below in the context by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at 190 °C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by $γ \left(t\right) = {γ}_{0} sin \left(ωt\right)$

If the applied strain is within the linear viscoelastic regime, the resulting sinusoidal stress response can be given by $σ \left(t\right) = {σ}_{0} sin \left(ωt+δ\right)$ where
*σ*₀ and *γ*₀ are the stress and strain amplitudes, respectively
*ω* is the angular frequency
δ is the phase shift (loss angle between applied strain and stress response)
t is the time

Dynamic test results are typically expressed by means of several different rheological functions, namely the shear storage modulus G', the shear loss modulus, G", the complex shear modulus, G*, the complex shear viscosity, η*, the dynamic shear viscosity, η', the out-of-phase component of the complex shear viscosity η" and the loss tangent, tan δ which can be expressed as follows: $G ′ = \frac{{σ}_{0}}{{γ}_{0}} cos δ \left[Pa\right]$ $G " = \frac{{σ}_{0}}{{γ}_{0}} sin δ \left[Pa\right]$ ${G}^{∗} = G ′ + iG " \left[Pa\right]$ ${η}^{∗} = η ′ - iη " \left[Pa.s\right]$ $η ′ = \frac{G "}{ω} \left[Pa.s\right]$ $η ′ = \frac{G "}{ω} \left[Pa.s\right]$

The determination of so-called Shear Thinning Index, which correlates with MWD and is independent of Mw, is done as described in equation 9. ${SHI}_{\left(x/y\right)} = \frac{Eta * for \left(G*=x kPa\right)}{Eta * for \left(G*=y kPa\right)}$

For example, the SHI_{(2.7/210)} is defined by the value of the complex viscosity, in Pa s, determined for a value of G* equal to 2.7 kPa, divided by the value of the complex viscosity, in Pa s, determined for a value of G* equal to 210 kPa.

The values of storage modulus (G'), loss modulus (G"), complex modulus (G*) and complex viscosity (η*) were obtained as a function of frequency (ω).

Thereby, e.g. η*_{300rad/s} (eta*_{300rad/s}) is used as abbreviation for the complex viscosity at the frequency of 300 rad/s and η*_{0.05rad/s} (eta*_{0.05rad/s}) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. tan_{0.05} is used as abbreviation for the ratio of the loss modulus (G") and the storage modulus (G') at 0.05 rad/s and tan₃₀₀ is used as abbreviation for the ratio of the loss modulus (G") and the storage modulus (G') at 300 rad/s.

The elasticity balance tan_{0.05}/tan₃₀₀ is defined as the ratio of the loss tangent tan_{0.05} and the loss tangent tan₃₀₀.

Besides the above mentioned rheological functions one can also determine other rheological parameters such as the so-called elasticity index *EI(x).* The elasticity index *EI(x)* is the value of the storage modulus (G') determined for a value of the loss modulus (G") of x kPa and can be described by equation 10. $EI \left(x\right) = G ′ for \left(G"=x kPa\right) \left[Pa\right]$

For example, the E/(5kPa) is the defined by the value of the storage modulus (G'), determined for a value of G" equal to 5 kPa.

The polydispersity index, *PI,* is defined by equation 11. $PI = \frac{{10}^{5}}{G ′ \left({ω}_{COP}\right)} , {ω}_{COP} = ω for \left(G′=G"\right)$ where ω_{COP} is the cross-over angular frequency, determined as the angular frequency for which the storage modulus, G', equals the loss modulus, G".

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"Interpolate y-values to x-values from parameter"* and the *"logarithmic interpolation type"* were applied.

### References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362
[2] The influence of molecular structure on some rheological properties of polyethylene", Heino, E.L., Borealis Polymers Oy, Porvoo, Finland, Annual Transactions of the Nordic Rheology Society, 1995.).
[3] Definition of terms relating to the non-ultimate mechanical properties of polymers, Pure & Appl. Chem., Vol. 70, No. 3, pp. 701-754, 1998.

### Strain hardening (SH) modulus

The strain hardening test is a modified tensile test performed at 80 °C on a specially prepared thin sample. The Strain Hardening Modulus (MPa), <Gp>, is calculated from True Strain-True Stress curves; by using the slope of the curve in the region of True Strain, λ, is between 8 and 12.

The true strain, λ, is calculated from the length, I (mm), and the gauge length, l0 (mm), as shown by Equation 1. $λ = \frac{l}{{l}_{0}} = 1 + \frac{Δl}{{l}_{0}}$ where Δl is the increase in the specimen length between the gauge marks, (mm). The true stress, σtrue (MPa), is calculated according to formula 2, assuming conservation of volume between the gauge marks: ${σ}_{true} = {σ}_{n} λ$ where σn is the engineering stress.

The Neo-Hookean constitutive model (Equation 3) is used to fit the true strain- true stress data from which <Gp> (MPa) for 8 < λ < 12 is calculated. ${σ}_{true} = \frac{\left〈Gp\right〉}{20} \left({λ}^{2}-\frac{1}{λ}\right) + C$ where C is a mathematical parameter of the constitutive model describing the yield stress extrapolated to λ = 0.

Initially five specimens are measured. If the variation coefficient of <Gp> is greater than 2.5 %, then two extra specimens are measured. In case straining of the test bar takes place in the clamps the test result is discarded.

The PE granules of materials were compression molded in sheets of 0.30 mm thickness according to the press parameters as provided in ISO 17855-2.

After compression molding of the sheets, the sheets were annealed to remove any orientation or thermal history and maintain isotropic sheets. Annealing of the sheets was performed for 1 h in an oven at a temperature of (120 ± 2) °C followed by slowly cooling down to room temperature by switching off the temperature chamber. During this operation free movement of the sheets was allowed.

Next, the test pieces were punched from the pressed sheets. The specimen geometry of the modified ISO 37:1994 Type 3 (Figure 3) was used.

The sample has a large clamping area to prevent grip slip, dimensions given in Table 1.

**Table 1: Dimensions of Modified ISO 37:1994 Type 3**

| Dimension | | Size (mm) |
|---|---|---|
| L | start length between clamps | 30.0 +/- 0.5 |
| l0 | Gauge length | 12.5 +/- 0.1 |
| l1 | Prismatic length | 16.0 +/- 1.0 |
| l3 | Total length | 70 |
| R1 | Radius | 10.0 +/- 0.03 |
| R2 | Radius | 8.06 +/- 0.03 |
| b1 | Prismatic width | 4.0 +/- 0.01 |
| b2 | Clamp width | 20.0 +/- 1.0 |
| h | Thickness | 0.30 + 0.05/0.30 - 0.03 |

The punching procedure is carried out in such a way that no deformation, crazes or other irregularities are present in the test pieces.

The thickness of the samples was measured at three points of the parallel area of the specimen; the lowest measured value of the thickness of these measurements was used for data treatment.
1. The following procedure is performed on a universal tensile testing machine having controlled temperature chamber and non-contact extensometer:
2. Condition the test specimens for at least 30 min in the temperature chamber at a temperature of (80 ± 1) °C prior to starting the test.
3. Clamp the test piece on the upper side.
4. Close the temperature chamber.
5. Close the lower clamp after reaching the temperature of (80 ± 1) °C.
6. Equilibrate the sample for 1 min between the clamps, before the load is applied and measurement starts.
7. Add a pre-load of 0.5 N at a speed of 5 mm/min.
8. Extend the test specimen along its major axis at a constant traverse speed (20 mm/min) until the sample breaks.

During the test, the load sustained by the specimen is measured with a load cell of 200 N. The elongation is measured with a non-contact extensometer

### Gel content

The gel count was measured with a gel counting apparatus consisting of a measuring extruder, ME 25 / 5200 V1, 25*25D, with five temperature conditioning zones adjusted to a temperature profile of 170/180/190/190/190°C), an adapter and a slit die (with an opening of 0.5 * 150 mm). Attached to this were a chill roll unit (with a diameter of 13 cm with a temperature set of 50°C), a line camera (CCD 4096 pixel for dynamic digital processing of grey tone images) and a winding unit.

For the gel count content measurements the materials were extruded at a screw speed of 30 rounds per minute, a drawing speed of 3-3.5 m/min and a chill roll temperature of 50°C to make thin cast films with a thickness of 70 µm and a width of approximately 110 mm.

The resolution of the camera is 25 µm x 25 µm on the film.

The camera works in transmission mode with a constant grey value (auto.set. margin level = 170). The system is able to decide between 256 grey values from black = 0 to white = 256. For detecting gels, a sensitivity level dark of 25% is used.

For each material the average number of gel dots on a film surface area of 10 m² was inspected by the line camera. The line camera was set to differentiate the gel dot size according to the following:
Gel size (the size of the longest dimension of a gel)
300 µm to 599 µm
600 µm to 999 µm
above 1000 µm

### Dart drop strength (DDI)

Dart-drop was measured using ASTM D1709, method A (Alternative Testing Technique) from the films as produced indicated below. A dart with a 38 mm diameter hemispherical head was dropped from a height of 0.66 m onto a multilayer film clamped over a hole. Successive sets of twenty specimens were tested. One weight was used for each set and the weight was increased (or decreased) from set to set by uniform increments. The weight resulting in failure of 50 % of the specimens was calculated and reported.

### Tensile Modulus

Tensile modulus (E-Mod (MPa) was measured in machine and/or transverse direction according to ISO 527-3 on film samples prepared as described under the Film Sample preparation with film thickness of 40 µm and at a cross head speed of 1 mm/min for the modulus.

### Film sample preparation

The test films consisting of the inventive composition and respective comparative compositions of 40µm thickness, were prepared using a Collin 30 lab scale mono layer blown film line. The film samples were produced at 194°C, a 1:2.5 blow-up ratio, frostline distance of 120 mm.

### Experimental part

### Preparation of examples

### Cat.Example: Catalyst preparation (CAT1) for inventive Examples

### Loading of SiO2:

10 kg of silica (PQ Corporation ES757, calcined 600°C) was added from a feeding drum and inertized in the reactor until O₂ level below 2 ppm was reached.

### Preparation of MAO/tol/MC:

30 wt% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition, stirring time 30 min. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

### Preparation of catalyst:

Reactor temperature was set to 10°C (oil circulation temp) and stirring 40 rpm for MAO/tol/MC addition. MAO/tol/MC solution (target 22.5 kg, actual 22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour.

After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

### Cat.Example: Catalyst preparation for comparative Examples (CAT2)

130 grams of a metallocene complex bis(1-methyl-3-n-butylcyclopentadienyl) zirconium (IV) dichloride (CAS no. 151840-68-5), and 9.67 kg of a 30% solution of commercial methylalumoxane (MAO) in toluene were combined and 3.18 kg dry, purified toluene was added. The thus obtained complex solution was added onto 17 kg silica carrier Sylopol 55 SJ (supplied by Grace) by very slow uniform spraying over 2 hours. The temperature was kept below 30°C. The mixture was allowed to react for 3 hours after complex addition at 30°C.

### Polymerization: Inventive Examples: multimodal copolymer (P) of ethylene with 1-butene and 1-hexene comonomers for IEs and CE

Borstar pilot plant with a 3-reactor set-up (loop1 - loop2 - GPR 1) and a prepolymerization loop reactor.

The multimodal copolymers (P) according to the invention (LLDPE-1, LLDPE-2) as well as for the comparative examples (LLDPE-3) were produced by using the polymerization conditions as given in table 2.

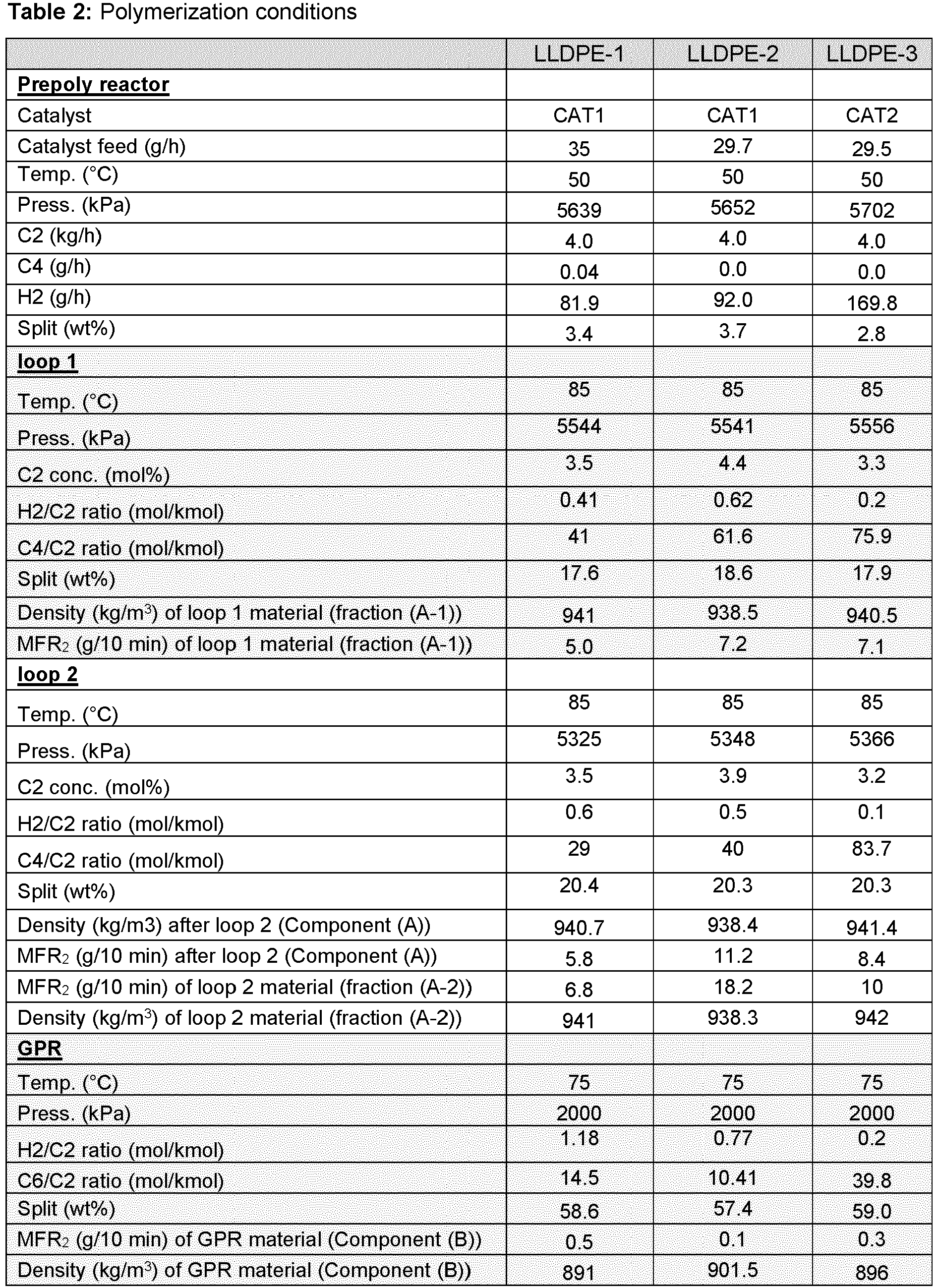

The polymers were mixed with 2400 ppm of Irganox B561 and 270 ppm of Dynamar FX 5922 compounded and extruded under nitrogen atmosphere to pellets by using a JSW extruder so that the SEI was 230 kWh/kg and the melt temperature 250°C.

**Table 3: Material properties of the multimodal copolymers (P)**

| **Material** | **LLDPE-1** | **LLDPE-2** | **LLDPE-3** |
|---|---|---|---|
| MFR₂ (g/10 min) (final) | 1.3 | 0.73 | 1.5 |
| MFR₂₁ (g/10 min) | 38.7 | 25.6 | 32.5 |
| MFR₂₁/MFR₂ | 29.8 | 35.1 | 21.7 |
| Density (kg/m³) | 913 | 917 | 914.5 |
| MFR₂(A)/MFR₂(final) | 4.4 | 15.3 | 5.6 |
| MFR₂(A-1)/MFR₂(A) | 0.8 | 0.64 | 0.84 |

The multimodal copolymers (P) were blended with a mixed-plastic-polyethylene recycling blend (B) and converted into a blown film.

Amounts and blown film properties are shown in Table 4.

As mixed-plastic-polyethylene recycling blend (B) NAV 101 was used.

NAV 101 is a low density polyethylene (LDPE) post-consumer recyclate blend available from Ecoplast Kunststoffrecycling GmbH. The properties of NAV101 are shown in table A.

**Table A: Properties of NAV 101**

| | |
|---|---|
| Ethylene content (wt%) | 90.67 |
| isol. C3 content (wt%) | 0 |
| C4 content (wt%) | 2.23 |
| C6 content (wt%) | 2.73 |
| C7 content (wt%) | 0.48 |
| iPP content (wt%) | 3.89 |
| LDPE content (wt%) | 33.00 |
| Density (kg/m³) | 923.9 |
| MFR₂ (g/10min) | 1.02 |
| MFR₅ (g/10min) | 3.57 |
| MFR₂₁ (g/10min) | 41.56 |
| SHI2.7/210 | 22.16 |
| eta0.05 (Pa·s) | 16187 |
| eta300 (Pa·s) | 618 |
| PI (s-1) | 1.46 |
| SH modulus (MPa) | 14.3 |
| Gel content (>1000 µm) (1/m²) | 16.9 |
| Gel content (600-1000 µm) (1/m²) | 175.1 |
| Gel content (300-599) (µm/1m²) | 885.9 |

**Table 4:**

| | unit | IE1 | IE2 | CE1 | IE3 | CE2 | IE4 |
|---|---|---|---|---|---|---|---|
| LLDPE-1 | wt% | | 90 | | 70 | | 50 |
| LLDPE-2 | | 90 | | | | | |
| LLDPE-3 | | | | 90 | | 70 | |
| NAV 101 | wt% | 10 | 10 | 10 | 30 | 30 | 50 |
| Blown film | | | | | | | |
| TM/MD | MPa | 214 | 166 | 179 | 176 | 181 | 182 |
| TM/TD | MPa | 232 | 180 | 212 | 213 | 198 | 223 |
| DDI | g | 1903 | 1020 | 868 | 545 | 470 | 336 |

From the above table it can be clearly seen, that the films of the Inventive Examples consisting of the inventive compositions show an excellent combination of stiffness and impact.

IE1 and IE2 compared to CE1, show clearly improved DDI, whereas the tensile modulus is comparable. The same is true for IE3 compared to CE2.

From these results, it can be seen that the specific multimodal copolymer (P) according to the present invention allows the addition of higher amounts of recycled LDPE.

## Claims

1. A composition comprising
(I) 50.0 to 99.0 wt% of a metallocene catalysed multimodal copolymer (P) of ethylene, which consists of
(i) 30.0 to 70.0 wt% of an ethylene-1-butene polymer component (A) and
(ii) 70.0 to 30.0 wt% of an ethylene-1-hexene polymer component (B), whereby the ethylene-1-butene polymer component (A) has
a density in the range of from 920 to 960 kg/m³ and an MFR₂ (190°C, 2.16 kg, ISO 1133) in the range of from 1.0 to 400.0 g/10 min;
the ethylene-1-hexene polymer component (B) has
a density in the range of from 880 to 915 kg/m³ and an MFR₂ (190°C, 2.16 kg, ISO 1133) in the range of from 0.01 to 1.5 g/10 min; and
whereby the multimodal copolymer (P) has
a density in the range of from 905.0 to 930 kg/m³ and an MFR₂ (190°C, 2.16 kg, ISO 1133) in the range of from 0.1 to 2.0 g/10 min and
a ratio of the MFR₂₁ (190°C, 21.6 kg, ISO 1133) to MFR₂ (190°C, 2.16 kg, ISO 1133), MFR₂₁/MFR₂, in the range of from 23 to 50; and
(II) 1.0 to 50.0 wt% of a mixed-plastic-polyethylene recycling blend (B) having
• a MFR₂ (ISO 1133, 2.16 kg, 190 °C) of from 0.1 to 1.2 g/10 min, preferably from 0.3 to 1.1 g/10 min;
• a density of from 910 to 945 kg/m³, preferably from 915 to 942 kg/m³, most preferably from 918 to 940 kg/m³; and
• a total amount of ethylene units (C2 units) of from 80.0 to 96.0 wt%, as measured by NMR of the d2-tetrachloroethylene soluble fraction,
with the total amount of C2 units being based on the total weight amount of monomer units in the mixed-plastic-polyethylene blend (B) and measured according to quantitative ¹³C{1H} NMR measurement,
whereby the amount of (I) and (II) adds up to 100.0 wt%.

2. The composition according to claim 1, wherein in the metallocene catalysed multimodal copolymer (P) the ethylene-1-butene polymer component (A) consists of an ethylene polymer fraction (A-1) and an ethylene polymer fraction (A-2), wherein the density of fractions (A-1) and (A-2) is in the range of from 920 to 960 kg/m³ and the MFR₂ (190°C, 2.16 kg, ISO 1133) is in the range of from 0.1 to 500 g/10 min and wherein the density and/or the MFR₂ (190°C, 2.16 kg, ISO 1133) of ethylene polymer fractions (A-1) and (A-2) is different.

3. The composition according to claim 1 or 2, wherein in the metallocene catalysed multimodal copolymer (P) the ethylene polymer fractions (A-1) and (A-2) have a MFR₂ of 1.5 to 400.0 g/10 min, preferably of 2.0 to 100.0 g/10 min, even more preferably of 2.5 to 50.0 g/10 min, and most preferably 3.0 to 25.0 g/10 min and/or
the ethylene polymer component (A) preferably has a MFR₂ of 2.0 to 100 g/10 min, more preferably of 2.5 to 40 g/10 min and even more preferably of 3.0 to 15 g/10 min and/or
the ethylene polymer component (B) preferably has a MFR₂ of preferably of 0.02 to 1.3 g/10 min, more preferably of 0.05 to 1.0 g/10 min and even more preferably of 0.08 to 0.8 g/10 min.

4. The composition according to any of the preceding claims, wherein the MFR₂ of the multimodal copolymer (P) preferably is in the range of 0.3 to 1.8 g/10 min, more preferably 0.4 to 1.6 g/10 min and even more preferably of 0.5 to 1.5 g/10.

5. The composition according to any of the preceding claims, wherein the ratio of the MFR₂₁ (190°C, 21.6 kg, ISO 1133) to MFR₂ (190°C, 2.16 kg, ISO 1133), MFR₂₁/MFR₂, of the metallocene catalysed multimodal copolymer (P) preferably is in the range from 25 to 45, more preferably from 27 to 40.

6. The composition according to any of the preceding claims, wherein in the metallocene catalysed multimodal copolymer (P)
the ethylene polymer fractions (A-1) and (A-2) preferably have a density in the range of from 925 to 955 kg/m³, more preferably of 930 to 950 kg/m³, like 935 to 945 kg/m³; and/or
the density of the ethylene polymer component (A) preferably is in the range of from 925 to 950 kg/m³, more preferably 930 to 945 kg/m³ and/or the density of the ethylene polymer component (B) preferably is in the range of from 890 to 905 kg/m³.

7. The composition according to any of the preceding claims, wherein the density of the metallocene catalysed multimodal copolymer (P) is in the range of 908 to 925 kg/m³, preferably of 910 to 920 kg/m³ and more preferably of 912 to 918 kg/m³.

8. The composition according to any of the preceding claims, wherein in the metallocene catalysed multimodal copolymer (P) the ethylene polymer component (A) is preferably present in an amount of 32.0 to 55.0 wt% based on the multimodal copolymer (P), more preferably in an amount of 34.0 to 45.0 wt% based on the multimodal copolymer (P), and
the ethylene polymer component (B) is preferably present in an amount of 68.0 to 45.0 wt% based on the multimodal copolymer (P), and more preferably in an amount of 66.0 to 55.0 wt% based on the multimodal copolymer (P).

9. The composition according to any of the preceding claims, wherein the metallocene catalysed multimodal copolymer (P) is produced in the presence of metallocene complex of formula (I): 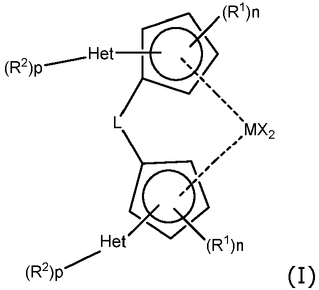
wherein each X is independently a halogen atom, a C₁₋₆-alkyl, C₁₋₆-alkoxy group, phenyl or benzyl group;
each Het is independently a monocyclic heteroaromatic group containing at least one heteroatom selected from O or S;
L is -R'₂Si-, wherein each R' is independently C₁₋₂₀-hydrocarbyl or C₁₋₁₀-alkyl substituted with alkoxy having 1 to 10 carbon atoms;
M is Ti, Zr or Hf;
each R¹ is the same or different and is a C₁₋₆-alkyl group or C₁₋₆-alkoxy group; each n is 1 to 2;
each R² is the same or different and is a C₁₋₆-alkyl group, C₁₋₆-alkoxy group or - Si(R)₃ group;
each R is C₁₋₁₀-alkyl or phenyl group optionally substituted by 1 to 3 C₁₋₆-alkyl groups; and
each p is 0 to 1.

10. The composition according to any of the preceding claims, wherein the mixed-plastic-polyethylene recycling blend (B) comprises a total amount of ethylene units (C2 units) of from 80.0 wt% to 96.0 wt%, more preferably of from 82.5 wt% to 95.5 wt%, still more preferably of from 85.0 wt% to 95.5 wt% and most preferably of from 87.5 wt% to 95.0 wt%;
a total amount of continuous units having 3 carbon atoms corresponding to polypropylene (continuous C3 units) of from 0.2 to 6.5 wt%, more preferably from 0.4 wt% to 6.0 wt%, still more preferably from 0.6 wt% to 5.5 wt% and most preferably from 0.75 wt% to 5.0 wt%; the total amounts of C2 units and continuous C3 units thereby are based on the total weight amount of monomer units in the mixed-plastic-polyethylene recycling blend (B) and are measured according to quantitative ¹³C{1H} NMR measurement.

11. The composition according to any of the preceding claims, wherein the mixed-plastic-polyethylene recycling blend (B) preferably comprises one or more in any combination, preferably all of:
a total amount of units having 3 carbon atoms as isolated C3 units (isolated C3 units) of from 0.00 wt% to 0.50 wt%, more preferably from 0.00 wt% to 0.40 wt%, still more preferably from 0.00 wt% to 0.30 wt% and most preferably from 0.00 wt% to 0.25 wt%;
a total amount of units having 4 carbon atoms (C4 units) of from 0.50 to 5.00 wt%, more preferably from 0.75 wt% to 4.00 wt%, still more preferably from 1.00 wt% to 3.50 wt% and most preferably from 1.25 wt% to 3.00 wt%;
a total amount of units having 6 carbon atoms (C6 units) of from 0.50 to 7.50 wt%, more preferably from 0.75 wt% to 6.50 wt%, still more preferably from 1.00 wt% to 5.50 wt% and most preferably from 1.25 wt% to 5.00 wt%;
a total amount of units having 7 carbon atoms (C7 units) of from 0.20 wt% to 2.50 wt%, of from 0.30 wt% to 2.00 wt%, still more preferably of from 0.40 to 1.50 wt% and most preferably of from 0.45 wt% to 1.25 wt%, and
a LDPE content of from 20.0 to 65.0 wt%, more preferably from 25.0 wt% to 62.5 wt%, still more preferably from 30.0 wt% to 60.0 wt% and most preferably from 32.0 wt% to 55.0 wt%; the total amounts of C2 units, continuous C3 units, isolated C3 units, C4 units, C6 units, C7 units and LDPE content thereby are based on the total weight amount of monomer units in the mixed-plastic-polyethylene recycling blend (B) and are measured or calculated according to quantitative ¹³C{1H} NMR measurement.

12. The composition according to any of the preceding claims, wherein the composition comprises preferably 60.0 to 95.0 wt% and more preferably 65.0 to 92.0 wt% of the metallocene catalysed multimodal copolymer (P) of ethylene with at least two different comonomers selected from alpha-olefins having from 4 to 10 carbon atoms and
preferably 5.0 to 40.0 wt% and more preferably 8.0 to 35.0 wt% of the mixed-plastic-polyethylene recycling blend (B).

13. Film comprising a composition according to any of the preceding claims 1 to 12.

14. Film according to claim 13, wherein the film is **characterized by** a dart-drop impact strength (DDI) determined according to ASTM D1709, method A on a 40 µm monolayer test blown film of at least 300 g up to 2500 g, preferably 400 g to 2200 g and more preferably 500 g to 2000 g and a tensile modulus (measured on a 40 µm monolayer test blown film according to ISO 527-3) in machine (MD) as well as in transverse (TD) direction in the range of from >150 MPa to 350 MPa, preferably of from 160 MPa to 300 MPa.

15. Use of a film according to any of the preceding claims 13 to 14 as packing material, in particular for secondary packaging, which do not require a food approval or even for primary packaging for non-food products.

## Patentansprüche

1. Zusammensetzung umfassend
(I) 50,0 bis 99,0 Gew.-% eines Metallocen-katalysierten multimodalen Copolymers (P) aus Ethylen, bestehend aus
(i) 30,0 bis 70,0 Gew.-% einer Ethylen-1-Buten-Polymerkomponente (A) und
(ii) 70,0 bis 30,0 Gew.-% einer Ethylen-1-Hexen-Polymerkomponente (B),
wobei die Ethylen-1-Buten-Polymerkomponente (A)
eine Dichte im Bereich von 920 bis 960 kg/m³ und eine MFR₂ (190°C, 2,16 kg, ISO 1133) im Bereich von 1,0 bis 400,0 g/10 min aufweist;
die Ethylen-1-Hexen-Polymerkomponente (B)
eine Dichte im Bereich von 880 bis 915 kg/m³ und eine MFR₂ (190°C, 2,16 kg, ISO 1133) im Bereich von 0,01 bis 1,5 g/10 min aufweist; und
wobei das multimodale Copolymer (P)
eine Dichte im Bereich von 905,0 bis 930 kg/m³ und eine MFR₂ (190°C, 2,16 kg, ISO 1133) im Bereich von 0,1 bis 2,0 g/10 min und
ein Verhältnis der MFR₂₁ (190°C, 21,6 kg, ISO 1133) zur MFR₂ (190°C, 2,16 kg, ISO 1133), MFR₂₁/MFR₂, im Bereich von 23 bis 50 aufweist; und
(II) 1,0 bis 50,0 Gew.-% einer gemischten Kunststoff-Polyethylen-Recyclingmischung (B) mit
• einer MFR₂ (ISO 1133, 2,16 kg, 190 °C) von 0,1 bis 1,2 g/10 min, vorzugsweise von 0,3 bis 1,1 g/10 min;
• einer Dichte von 910 bis 945 kg/m³, vorzugsweise von 915 bis 942 kg/m³, besonders bevorzugt von 918 bis 940 kg/m³; und
• einer Gesamtmenge an Ethyleneinheiten (C2-Einheiten) von 80,0 bis 96,0 Gew.-%, gemessen mittels NMR der in d2-Tetrachlorethylen löslichen Fraktion,
wobei die Gesamtmenge an C2-Einheiten auf der Gesamtgewichtsmenge der Monomereinheiten in der gemischten Kunststoff-Polyethylen-Mischung (B) basiert und gemäß quantitativer ¹³C{1H} NMR-Messung gemessen ist, wobei sich die Menge von (I) und (II) auf 100,0 Gew.-% addiert.

2. Zusammensetzung nach Anspruch 1, wobei in dem Metallocen-katalysierten multimodalen Copolymer (P) die Ethylen-1-Buten-Polymerkomponente (A) aus einer Ethylen-Polymerfraktion (A-1) und einer Ethylen-Polymerfraktion (A-2) besteht, wobei die Dichte der Fraktionen (A-1) und (A-2) im Bereich von 920 bis 960 kg/m³ liegt und die MFR₂ (190 °C, 2,16 kg, ISO 1133) im Bereich von 0,1 bis 500 g/10 min liegt und wobei die Dichte und/oder die MFR₂ (190 °C, 2,16 kg, ISO 1133) der Ethylen-Polymerfraktionen (A-1) und (A-2) unterschiedlich ist.

3. Zusammensetzung nach Anspruch 1 oder 2, wobei in dem Metallocen-katalysierten multimodalen Copolymer (P) die Ethylen-Polymerfraktionen (A-1) und (A-2) einen MFR₂ von 1,5 bis 400,0 g/10 min, vorzugsweise von 2,0 bis 100,0 g/10 min, besonders bevorzugt von 2,5 bis 50,0 g/10 min, und am meisten bevorzugt von 3,0 bis 25,0 g/min aufweisen und/oder
die Ethylen-Polymerkomponente (A) vorzugsweise eine MFR₂ von 2,0 bis 100 g/10 min, besonders bevorzugt von 2,5 bis 40 g/10 min und noch mehr bevorzugt von 3,0 bis 15 g/10 min aufweist und/oder
die Ethylen-Polymerkomponente (B) vorzugsweise eine MFR₂ von 0,02 bis 1,3 g/10 min, besonders bevorzugt von 0,05 bis 1,0 g/10 min und noch mehr bevorzugt von 0,08 bis 0,8 g/10 min aufweist.

4. Zusammensetzung nach einem der vorhergehenden Ansprüche, wobei die MFR₂ des multimodalen Copolymers (P) vorzugsweise im Bereich von 0,3 bis 1,8 g/10 min, besonders bevorzugt von 0,4 bis 1,6 g/10 min und noch mehr bevorzugt von 0,5 bis 1,5 g/10 ist.

5. Zusammensetzung nach einem der vorhergehenden Ansprüche, wobei das Verhältnis der MFR₂₁ (190°C, 21,6 kg, ISO 1133) zur MFR₂ (190°C, 2,16 kg, ISO 1133), MFR₂₁/MFR₂, des Metallocen-katalysierten multimodalen Copolymers (P) vorzugsweise im Bereich von 25 bis 45, besonders bevorzugt von 27 bis 40 ist.

6. Zusammensetzung nach einem der vorhergehenden Ansprüche, wobei in dem Metallocen-katalysierten multimodalen Copolymer (P)
die Ethylen-Polymerfraktionen (A-1) und (A-2) vorzugsweise eine Dichte im Bereich von 925 bis 955 kg/m³, besonders bevorzugt von 930 bis 950 kg/m³, wie 935 bis 945 kg/m³, aufweisen; und/oder
die Dichte der Ethylen-Polymerkomponente (A) vorzugsweise im Bereich von 925 bis 950 kg/m³, besonders bevorzugt von 930 bis 945 kg/m³ ist und/oder
die Dichte der Ethylen-Polymerkomponente (B) vorzugsweise im Bereich von 890 bis 905 kg/m³ ist.

7. Zusammensetzung nach einem der vorhergehenden Ansprüche, wobei die Dichte des Metallocen-katalysierten multimodalen Copolymers (P) im Bereich von 908 bis 925 kg/m³, vorzugsweise von 910 bis 920 kg/m³ und besonders bevorzugt von 912 bis 918 kg/m³ ist.

8. Zusammensetzung nach einem der vorhergehenden Ansprüche, wobei in dem Metallocen-katalysierten multimodalen Copolymer (P) die Ethylen-Polymerkomponente (A) vorzugsweise in einer Menge von 32,0 bis 55,0 Gew.-%, bezogen auf das multimodale Copolymer (P), besonders bevorzugt in einer Menge von 34,0 bis 45,0 Gew.-%, bezogen auf das multimodale Copolymer (P), vorhanden ist, und
die Ethylen-Polymerkomponente (B) vorzugsweise in einer Menge von 68,0 bis 45,0 Gew.-%, bezogen auf das multimodale Copolymer (P), und besonders bevorzugt in einer Menge von 66,0 bis 55,0 Gew.-%, bezogen auf das multimodale Copolymer (P), vorhanden ist.

9. Zusammensetzung nach einem der vorhergehenden Ansprüche, wobei das Metallocen-katalysierte multimodale Copolymer (P) in der Gegenwart eines Metallocenkomplexes der Formel (I) hergestellt wird: 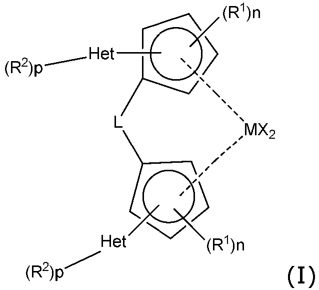
wobei jedes X unabhängig ein Halogenatom, eine C₁₋₆-Alkyl-, C₁₋₆-Alkoxygruppe, Phenyl- oder Benzylgruppe ist;
jedes Het unabhängig eine monocyclische heteroaromatische Gruppe ist, die mindestens ein Heteroatom, ausgewählt aus O oder S, enthält;
L -R'₂Si- ist, wobei jedes R' unabhängig C₁₋₂₀-Kohlenwasserstoff oder C₁₋₁₀-Alkyl, substituiert mit Alkoxy mit 1 bis 10 Kohlenstoffatomen, ist;
M Ti, Zr oder Hf ist;
jedes R¹ gleich oder unterschiedlich ist und eine C₁₋₆-Alkylgruppe oder C₁₋₆-Alkoxygruppe ist;
jedes n 1 bis 2 ist;
jedes R² gleich oder unterschiedlich ist und eine C₁₋₆-Alkylgruppe, C₁₋₆-Alkoxygruppe oder -Si(R)₃-Gruppe ist;
jedes R eine C₁₋₁₀-Alkyl- oder Phenylgruppe ist, die optional mit 1 bis 3 C₁₋₆-Alkylgruppen substituiert ist; und
jedes p 0 bis 1 ist.

10. Zusammensetzung nach einem der vorhergehenden Ansprüche, wobei die gemischte Kunststoff-Polyethylen-Recyclingmischung (B) eine Gesamtmenge an Ethyleneinheiten (C2-Einheiten) von 80,0 Gew.-% bis 96,0 Gew.-%, besonders bevorzugt von 82,5 Gew.-% bis 95,5 Gew.-%, noch mehr bevorzugt von 85,0 Gew.-% bis 95,5 Gew.-% und am meisten bevorzugt von 87,5 Gew.-% bis 95,0 Gew.-% umfasst;
eine Gesamtmenge an kontinuierlichen Einheiten mit 3 Kohlenstoffatomen, die Polypropylen entsprechen (kontinuierliche C3-Einheiten), von 0,2 bis 6,5 Gew.-%, besonders bevorzugt von 0,4 Gew.-% bis 6,0 Gew.-%, noch mehr bevorzugt von 0,6 Gew.-% bis 5,5 Gew.-% und am meisten bevorzugt von 0,75 Gew.-% bis 5,0 Gew.-% umfasst; die Gesamtmengen an C2-Einheiten und kontinuierlichen C3-Einheiten beziehen sich dabei auf die Gesamtgewichtsmenge an Monomereinheiten in der gemischten Kunststoff-Polyethylen-Recyclingmischung (B) und werden gemäß quantitativer ¹³C{1H} NMR-Messung gemessen.

11. Zusammensetzung nach einem der vorhergehenden Ansprüche, wobei die gemischte Kunststoff-Polyethylen-Recyclingmischung (B) vorzugsweise eines oder mehrere in beliebiger Kombination, vorzugsweise alle, umfasst:
eine Gesamtmenge an Einheiten mit 3 Kohlenstoffatomen als isolierte C3-Einheiten (isolierte C3-Einheiten) von 0,00 Gew.-% bis 0,50 Gew.-%, besonders bevorzugt von 0,00 Gew.-% bis 0,40 Gew.-%, noch mehr bevorzugt von 0,00 Gew.-% bis 0,30 Gew.-% und am meisten bevorzugt von 0,00 Gew.-% bis 0,25 Gew.-%;
eine Gesamtmenge an Einheiten mit 4 Kohlenstoffatomen (C4-Einheiten) von 0,50 bis 5,00 Gew.-%, besonders bevorzugt von 0,75 Gew.-% bis 4,00 Gew.-%, noch mehr bevorzugt von 1,00 Gew.-% bis 3,50 Gew.-% und am meisten bevorzugt von 1,25 Gew.-% bis 3,00 Gew.-%;
eine Gesamtmenge an Einheiten mit 6 Kohlenstoffatomen (C6-Einheiten) von 0,50 bis 7,50 Gew.-%, besonders bevorzugt von 0,75 Gew.-% bis 6,50 Gew.-%, noch mehr bevorzugt von 1,00 Gew.-% bis 5,50 Gew.-% und am meisten bevorzugt von 1,25 Gew.-% bis 5,00 Gew.-%;
eine Gesamtmenge an Einheiten mit 7 Kohlenstoffatomen (C7-Einheiten) von 0,20 Gew.-% bis 2,50 Gew.-%, von 0,30 Gew.-% bis 2,00 Gew.-%, noch mehr bevorzugt von 0,40 bis 1,50 Gew.-% und am meisten bevorzugt von 0,45 Gew.-% bis 1,25 Gew.-%, und
einen LDPE-Gehalt von 20,0 bis 65,0 Gew.-%, besonders bevorzugt von 25,0 Gew.-% bis 62,5 Gew.-%, noch mehr bevorzugt von 30,0 Gew.-% bis 60,0 Gew.-% und am meisten bevorzugt von 32,0 Gew.-% bis 55,0 Gew.-%; die Gesamtmengen an C2-Einheiten, kontinuierlichen C3-Einheiten, isolierten C3-Einheiten, C4-Einheiten, C6-Einheiten, C7-Einheiten und der LDPE-Gehalt beziehen sich dabei auf die Gesamtgewichtsmenge an Monomereinheiten in der gemischten Kunststoff-Polyethylen-Recyclingmischung (B) und werden gemessen oder berechnet gemäß quantitativer ¹³C{1H} NMR-Messung.

12. Zusammensetzung nach einem der vorhergehenden Ansprüche, wobei die Zusammensetzung vorzugsweise 60,0 bis 95,0 Gew.-% und besonders bevorzugt 65,0 bis 92,0 Gew.-% des Metallocen-katalysierten multimodalen Copolymers (P) aus Ethylen mit mindestens zwei verschiedenen Comonomeren, ausgewählt aus Alpha-Olefinen mit 4 bis 10 Kohlenstoffatomen und
vorzugsweise 5,0 bis 40,0 Gew.-% und besonders bevorzugt 8,0 bis 35,0 Gew.-% der gemischten Kunststoff-Polyethylen-Recyclingmischung (B) umfasst.

13. Folie umfassend eine Zusammensetzung nach einem der Ansprüche 1 bis 12.

14. Folie nach Anspruch 13, wobei die Folie **gekennzeichnet ist durch** eine Dart-Drop-Schlagzähigkeit (DDI), bestimmt nach ASTM D1709, Verfahren A, an einer 40 µm einschichtigen Testblasfolie von mindestens 300 g bis 2500 g, vorzugsweise 400 g bis 2200 g und besonders bevorzugt 500 g bis 2000 g, und einen Zugmodul (gemessen an einer 40 µm einschichtigen Testblasfolie gemäß ISO 527-3) in Maschinen- (MD) sowie in Querrichtung (TD) im Bereich von >150 MPa bis 350 MPa, vorzugsweise von 160 MPa bis 300 MPa.

15. Verwendung einer Folie nach einem der vorhergehenden Ansprüche 13 bis 14 als Verpackungsmaterial, insbesondere für Sekundärverpackungen, die keiner Lebensmittelzulassung bedürfen, oder auch für Primärverpackungen für Non-Food-Produkte.

## Revendications

1. Composition comprenant
(I) 50,0 à 99,0 % en poids d'un copolymère multimodal (P) catalysé par un métallocène d'éthylène, qui consiste en
(i) 30,0 à 70,0 % en poids d'un composant polymère d'éthylène-1-butène (A) et
(ii) 70,0 à 30,0 % en poids d'un composant polymère d'éthylène-1-hexène (B),
le composant polymère d'éthylène-1-butène (A) ayant
une densité dans la plage de 920 à 960 kg/m³ et un MFR₂ (190°C, 2,16 kg, ISO 1133) dans la plage de 1,0 à 400,0 g/10 min ;
le composant polymère d'éthylène-1-hexène (B) a
une densité dans la plage de 880 à 915 kg/m³ et un MFR₂ (190°C, 2,16 kg, ISO 1133) dans la plage de 0,01 à 1,5 g/10 min ; et
le copolymère multimodal (P) ayant
une densité dans la plage de 905,0 à 930 kg/m³ et un MFR₂ (190°C, 2,16 kg, ISO 1133) dans la plage de 0,1 à 2,0 g/10 min et
un rapport entre le MFR₂₁ (190°C, 21,6 kg, ISO 1133) et le MFR₂ (190°C, 2,16 kg, ISO 1133), MFR₂₁/MFR₂, dans la plage de 23 à 50 ; et
(II) 1,0 à 50,0 % en poids d'un mélange recyclé de polyéthylène et de plastiques mixtes (B) ayant
• un MFR₂ (ISO 1133, 2,16 kg, 190 °C) de 0,1 à 1,2 g/10 min, préférentiellement de 0,3 à 1,1 g/10 min ;
• une densité de 910 à 945 kg/m³, préférentiellement de 915 à 942 kg/m³, plus préférentiellement de 918 à 940 kg/m³ ; et
• une quantité totale d'unités éthylène (unités C2) de 80,0 à 96,0 % en poids, mesurée par RMN de la fraction soluble dans le d2-tétrachloroéthylène,
la quantité totale d'unités C2 étant basée sur la quantité totale en poids d'unités monomères dans le mélange de polyéthylène et de plastiques mixtes (B) et mesurée selon la mesure RMN quantitative ¹³C{1H},
la quantité de (I) et (II) s'additionnant jusqu'à 100,0 % en poids.

2. Composition selon la revendication 1, dans laquelle, dans le copolymère multimodal (P) catalysé par un métallocène, le composant polymère d'éthylène-1-butène (A) consiste en une fraction de polymère d'éthylène (A-1) et une fraction de polymère d'éthylène (A-2), la densité des fractions (A-1) et (A-2) étant dans la plage de 920 à 960 kg/m³ et le MFR₂ (190 °C, 2,16 kg, ISO 1133) est dans la plage de 0,1 et 500 g/10 min, et la densité et/ou le MFR₂ (190 °C, 2,16 kg, ISO 1133) des fractions de polymère d'éthylène (A-1) et (A-2) étant différentes.

3. Composition selon la revendication 1 ou 2, dans laquelle, dans le copolymère multimodal (P) catalysé par un métallocène, les fractions de polymère d'éthylène (A-1) et (A-2) ont un MFR₂ de 1,5 à 400,0 g/10 min, préférentiellement de 2,0 à 100,0 g/10 min, plus préférentiellement de 2,5 à 50,0 g/10 min, et encore plus préférentiellement de 3,0 à 25,0 g/10 min et/ou
le composant polymère d'éthylène (A) a préférentiellement un MFR₂ de 2,0 à 100 g/10 min, plus préférentiellement de 2,5 à 40 g/10 min et encore plus préférentiellement de 3,0 à 15 g/10 min et/ou
le composant polymère d'éthylène (B) a un MFR₂ préférentiellement de 0,02 à 1,3 g/10 min, plus préférentiellement de 0,05 à 1,0 g/10 min et encore plus préférentiellement de 0,08 à 0,8 g/10 min.

4. Composition selon l'une quelconque des revendications précédentes, dans laquelle le MFR₂ du copolymère multimodal (P) est préférentiellement dans la plage de 0,3 à 1,8 g/10 min, plus préférentiellement de 0,4 à 1,6 g/10 min et encore plus préférentiellement de 0,5 à 1,5 g/10.

5. Composition selon l'une quelconque des revendications précédentes, dans laquelle le rapport entre le MFR₂₁ (190°C, 21,6 kg, ISO 1133) et le MFR₂ (190°C, 2,16 kg, ISO 1133), MFR₂₁/MFR₂, du copolymère multimodal (P) catalysé par un métallocène est préférentiellement dans la plage de 25 à 45, plus préférentiellement de 27 à 40.

6. Composition selon l'une quelconque des revendications précédentes, dans laquelle, dans le copolymère multimodal (P) catalysé par un métallocène,
les fractions de polymère d'éthylène (A-1) et (A-2) ont préférentiellement une densité dans la plage de 925 à 955 kg/m³, plus préférentiellement de 930 à 950 kg/m³, tel que 935 à 945 kg/m³ ; et/ou
la densité du composant polymère d'éthylène (A) est préférentiellement dans la plage de 925 à 950 kg/m³, plus préférentiellement de 930 à 945 kg/m³ et/ou
la densité du composant polymère d'éthylène (B) est préférentiellement dans la plage de 890 à 905 kg/m³.

7. Composition selon l'une quelconque des revendications précédentes, dans laquelle la densité du copolymère multimodal (P) catalysé par un métallocène est dans la plage de 908 à 925 kg/m³, préférentiellement de 910 à 920 kg/m³ et plus préférentiellement de 912 à 918 kg/m³.

8. Composition selon l'une quelconque des revendications précédentes, dans laquelle, dans le copolymère multimodal (P) catalysé par un métallocène, le composant polymère d'éthylène (A) est préférentiellement présent en une quantité de 32,0 à 55,0 % en poids par rapport au copolymère multimodal (P), plus préférentiellement en une quantité de 34,0 à 45,0 % en poids par rapport au copolymère multimodal (P), et
le composant polymère d'éthylène (B) est préférentiellement présent en une quantité de 68,0 à 45,0 % en poids par rapport au copolymère multimodal (P), et plus préférentiellement en une quantité de 66,0 à 55,0 % en poids par rapport au copolymère multimodal (P).

9. Composition selon l'une quelconque des revendications précédentes, dans laquelle copolymère multimodal (P) catalysé par un métallocène est produit en présence d'un complexe de métallocène de formule (I) : 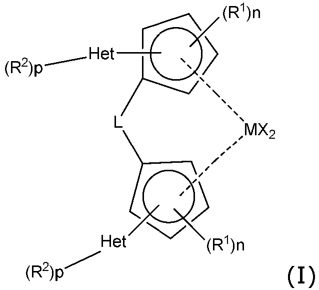
dans laquelle chaque X est indépendamment un atome d'halogène, un groupe C₁₋₆-alkyle, un groupe C₁₋₆-alkoxy, un groupe phényle ou benzyle ;
chaque Het est indépendamment un groupe hétéroaromatique monocyclique contenant au moins un hétéroatome choisi parmi O ou S ;
L est -R'₂Si-, chaque R' étant indépendamment C₁₋₂₀-hydrocarbyle ou C₁₋₁₀-alkyle substitué par un alcoxy ayant de 1 à 10 atomes de carbone ;
M est Ti, Zr ou Hf ;
chaque R¹ est identique ou différent et est un groupe C₁₋₆-alkyle ou un groupe C₁₋₆-alcoxy ;
chaque n est de 1 à 2 ;
chaque R² est identique ou différent et est un groupe C₁₋₆-alkyle, un groupe C₁₋₆-alcoxy ou un groupe -Si(R)₃ ;
chaque R est un groupe C₁₋₁₀-alkyle ou phényle éventuellement substitué par 1 à 3 groupes C₁₋₆-alkyle ; et
chaque p est de 0 à 1.

10. Composition selon l'une quelconque des revendications précédentes, dans laquelle le mélange recyclé de polyéthylène et de plastiques mixtes (B) comprend une quantité totale d'unités éthylène (unités C2) de 80,0 % en poids à 96,0 % en poids, préférentiellement de 82,5 % en poids à 95,5 % en poids, plus préférentiellement de 85,0 % en poids à 95,5 % en poids et encore plus préférentiellement de 87,5 % en poids à 95,0 % en poids ;
une quantité totale d'unités continues ayant 3 atomes de carbone correspondant au polypropylène (unités C3 continues) de 0,2 à 6,5 % en poids, préférentiellement de 0,4 % en poids à 6,0 % en poids, plus préférentiellement de 0,6 % en poids à 5,5 % en poids et encore plus préférentiellement de 0,75 % en poids à 5,0 % en poids ; les quantités totales d'unités C2 et d'unités C3 continues sont basées sur la quantité totale en poids d'unités monomères dans le mélange recyclé de polyéthylène et de plastiques mixtes (B) et sont mesurées selon la mesure RMN quantitative ¹³C{1H}.

11. Composition selon l'une quelconque des revendications précédentes, dans laquelle le mélange recyclé de polyéthylène et de plastiques mixtes (B) comprend préférentiellement un ou plusieurs dans n'importe quelle combinaison, de préférence tous de :
une quantité totale d'unités ayant 3 atomes de carbone en tant qu'unités C3 isolées (unités C3 isolées) de 0,00 % en poids à 0,50 % en poids, préférentiellement de 0,00 % en poids à 0,40 % en poids, plus préférentiellement de 0,00 % en poids à 0,30 % en poids et encore plus préférentiellement de 0,00 % en poids à 0,25 % en poids ;
une quantité totale d'unités ayant 4 atomes de carbone (unités C4) de 0,50 à 5,00 % en poids, préférentiellement de 0,75 % en poids à 4,00 % en poids, plus préférentiellement de 1,00 % en poids à 3,50 % en poids et encore plus préférentiellement de 1,25 % en poids à 3,00 % en poids ;
une quantité totale d'unités ayant 6 atomes de carbone (unités C6) de 0,50 à 7,50 % en poids, préférentiellement de 0,75 % en poids à 6,50 % en poids, plus préférentiellement de 1,00 % en poids à 5,50 % en poids et encore plus préférentiellement de 1,25 % en poids à 5,00 % en poids ;
une quantité totale d'unités ayant 7 atomes de carbone (unités C7) de 0,20 % en poids à 2,50 % en poids, de 0,30 % en poids à 2,00 % en poids, plus préférentiellement de 0,40 à 1,50 % en poids et encore plus préférentiellement de 0,45 % en poids à 1,25 % en poids, et
une teneur en LDPE de 20,0 à 65,0 % en poids, préférentiellement de 25,0 % en poids à 62,5 % en poids, plus préférentiellement de 30,0 % en poids à 60,0 % en poids et encore plus préférentiellement de 32,0 % en poids à 55,0 % en poids ; les quantités totales d'unités C2, d'unités C3 continues, d'unités C3 isolées, d'unités C4, d'unités C6, d'unités C7 et de teneur en LDPE sont basées sur la quantité totale en poids des unités monomères dans le mélange recyclé de polyéthylène et de plastiques mixtes (B) et sont mesurées ou calculées selon la mesure RMN quantitative ¹³C{1H}.

12. Composition selon l'une quelconque des revendications précédentes, dans laquelle la composition comprend préférentiellement 60,0 à 95,0 % en poids et plus préférentiellement 65,0 à 92,0 % en poids du copolymère multimodal (P) catalysé par un métallocène d'éthylène avec au moins deux comonomères différents choisis parmi les alpha-oléfines ayant de 4 à 10 atomes de carbone et
préférentiellement 5,0 à 40,0 % en poids et plus préférentiellement 8,0 à 35,0 % en poids du mélange recyclé de polyéthylène et de plastiques mixtes (B).

13. Film comprenant une composition selon l'une quelconque des revendications précédentes 1 à 12.

14. Film selon la revendication 13, dans lequel le film est **caractérisé par** une résistance à testeur d'impact falling dart (DDI) déterminée selon ASTM D1709, méthode A, sur un film soufflé d'essai monocouche de 40 µm d'au moins 300 g jusqu'à 2500 g, préférentiellement 400 g à 2200 g et plus préférentiellement 500 g à 2000 g et un module de traction (mesuré sur un film soufflé d'essai monocouche de 40 µm selon ISO 527-3) dans le sens machine (MD) ainsi que dans le sens transversal (TD) dans la plage de >150 MPa à 350 MPa, préférentiellement entre 160 MPa et 300 MPa.

15. Utilisation d'un film selon l'une quelconque des revendications précédentes 13 à 14 comme matériau d'emballage, en particulier pour un emballage secondaire, qui ne nécessite pas d'agrément alimentaire ou même pour un emballage primaire de produits non alimentaires.
